# EUROPÄISCHE PATENTSCHRIFT

(11) **EP 3 611 493 B1**
(45) Veröffentlichungstag und Bekanntmachung des Hinweises auf die Patenterteilung: **14.05.2025**
(21) Anmeldenummer: 18188620.1
(22) Anmeldetag: 13.08.2018
(51) Int. Cl.: G01N 21/15, G01N 21/952, G03B 17/17, H01R 43/05, H04N 23/51, H04N 23/55, H04N 23/81

(54) **ÜBERPRÜFUNGSVORRICHTUNG ZUM ÜBERPRÜFEN EINER KABELSPITZE EINES KABELS UND VERFAHREN ZUM REINIGEN**
INSPECTION APPARATUS FOR INSPECTING A CABLE TIP OF A CABLE AND METHOD FOR CLEANING
DISPOSITIF DE VÉRIFICATION DESTINÉ À VÉRIFIER UNE POINTE D'UN CÂBLE ET PROCÉDÉ DE NETTOYAGE

(43) Veröffentlichungstag der Anmeldung: 19.02.2020
(73) Patentinhaber: KOMAX HOLDING AG, 6036 Dierikon (CH)
(72) Erfinder: GISLER, Adrian, 6274 Eschenbach (CH); KISER, Markus, 6382 Büren (CH); STOCKER, Martin, 6403 Küssnacht (CH)
(74) Vertreter: Inventio AG

(56) Entgegenhaltungen:
- EP-A1- 3 109 624
- WO-A1-2017/033122
- WO-A1-2018/113846
- WO-A1-89/05468
- DE-A1- 19 713 973

## Beschreibung

Die vorliegende Erfindung betrifft eine Überprüfungsvorrichtung zum Überprüfen einer Kabelspitze eines Kabels und ein Verfahren zum Reinigen.

Die EP 3 109 624 A1 beschreibt eine Überprüfungsvorrichtung zum Überprüfen einer Kabelspitze eines Kabels gemäß des Stands der Technik. Die Überprüfungsvorrichtung in der EP 3 109 624 A1 umfasst eine Kamera, eine Beleuchtungseinrichtung und einen konischen Spiegelkragen (d.h. eine konische Anordnung von Einzelspiegeln um eine Zentralachse). Zur Überprüfung der Kabelspitze bzw. Qualitätsprüfung wird eine Kabelspitze in den konischen Spiegelkragen eingeführt, wo eine Kamera die Spiegelbilder der Kabelspitze aufnimmt. Diese Aufnahme wird mit einer Software beurteilt, d.h. die Kabelspitze wird auf ihre Qualität hin geprüft. Die Prüfung findet vor und nach dem Crimpen statt, um die Qualität der Abisolierung und der Verbindung des Crimpkontakts mit dem Kabel (d.h. die Crimpverbindung) zu überprüfen bzw. sicherzustellen. Dies kann durch zweimaliges Einbringen der Kabelspitze in eine einzelne Überprüfungsvorrichtung geschehen oder mittels zweier separater Überprüfungsvorrichtungen durchgeführt werden.

Ein zu beachtender Aspekt von Überprüfungsvorrichtungen ist die Verunreinigung von Teilen der Überprüfungsvorrichtung, insbesondere der Kamera und/oder der Spiegel, mit Schmutz und/oder Staub, insbesondere von dem zu überprüfenden Kabel, was zu Fehlern in der Qualitätsprüfung mittels der Kamera führen kann. Ohne die Reinigung der Kamera und/oder der Spiegel ist die Überprüfung der Kabelspitze mittels der Überprüfungsvorrichtung unter ungünstigen Umständen schon nach einem Tag nicht mehr zuverlässig möglich.

Die EP 3 109 624 A1 schlägt vor, die Verschmutzung zu reduzieren, indem die Elemente der Überprüfungsvorrichtung (d.h. Kamera, Beleuchtungseinrichtung und konischer Spiegelkragen) in ein Gehäuse platziert werden, in welchem ein Überdruck erzeugt wird. Dadurch soll ein Eindringen von Schmutzteilchen in das Gehäuse verhindert werden.

Nachteilig hieran ist, dass das Gehäuse alle Elemente bzw. Teile der Überprüfungsvorrichtung (d.h. Kamera, Beleuchtungseinrichtung und konischer Spiegelkragen) im Wesentlichen luftdicht zur Umgebung hin abschließen muss, was technisch aufwendig ist. Zudem muss die Kamera üblicherweise wiederholt, z.B. bezüglich der Farbe, kalibriert werden, was bei der Überprüfungsvorrichtung aus dem Stand der Technik technisch sehr aufwendig ist. Zudem kann Schmutz und/oder Staub, wenn dieser einmal in die Überprüfungsvorrichtung gelangt ist, zu der Kamera gelangen und sich hier absetzen, wodurch die Überprüfung der Kabelspitze unter Umständen nicht zuverlässig durchgeführt werden kann, da der Schmutz und/oder der Staub die von der Kamera aufgenommenen Bilder negativ beeinträchtigen.

Die WO 89/05468 A1 zeigt eine Vorrichtung zum optischen Abtasten der Oberfläche eines Objektes, wobei die Vorrichtung ein Gehäuse und einen im Gehäuse angeordneten Pultspiegel mit einer kegelstumpfförmigen, umlaufender Spiegelfläche umfasst.

DE 197 13 973 A1 zeigt eine offen ausgestaltete Vorrichtung zum optischen Prüfen der Mantelfläche zylindrischer Körper, wie Wellen, Kolbenstangen, Achsen und ähnliche Prüflinge. Die Vorrichtung umfasst einen rotationssymmetrischen Reflektorkörper. Eine Kamera ist auf der Verlängerung der Prüflingslängsachse angeordnet und zwar so, daß die Kamera mit ihrem Sichtfeld durch einen teildurchlässigen Spiegel hindurch und über die verspiegelte Oberfläche des Reflektorkörpers quasi senkrecht auf die Mantelfläche des Prüflings blickt.

Die WO 2017/033122 A1 ist auf ein schaufelloses Entstaubungssystem für Fotokameras gerichtet.

In der WO 2018/113846 A1 ist ein Verfahren zum Prüfen und Justieren einer digitalen Kamera unter Verwendung eines optischen Prüfnormals beschrieben.

Es kann unter anderem ein Bedarf an einer Überprüfungsvorrichtung zum Überprüfen einer Kabelspitze eines Kabels bestehen, bei der ein Verschmutzen von Teilen der Überprüfungsvorrichtung technisch einfach verhindert ist und/oder bei der Teile der Überprüfungsvorrichtung technisch einfach von Schmutz und/oder Staub gereinigt werden können. Zudem kann unter anderem Bedarf an einem Verfahren bestehen, mittels dem eine Überprüfungsvorrichtung zum Überprüfen einer Kabelspitze eines Kabels technisch einfach gereinigt wird.

Einem solchen Bedarf kann durch eine Überprüfungsvorrichtung gemäß dem unabhängigen Anspruch 1 bzw. durch ein Verfahren gemäß dem Anspruch 13 entsprochen werden. Vorteilhafte Ausführungsformen sind in den abhängigen Ansprüchen definiert.

Gemäß einem ersten Aspekt der Erfindung wird eine Überprüfungsvorrichtung zum Überprüfen einer Kabelspitze eines Kabels, insbesondere eines verarbeiteten Kabels, vorzugsweise eines mit einem Crimpkontakt über eine Crimpverbindung verbundenen Kabels, vorgeschlagen, wobei die Überprüfungsvorrichtung eine Spiegelanordnung mit einer Zentralachse aufweist, wobei die Kabelspitze zum Überprüfen der Kabelspitze entlang der Zentralachse in der Spiegelanordnung anordenbar ist, wobei die Spiegelanordnung einen Spiegelkragen umfassend mehrere in einem vorgegebenen Winkel zueinander und in einem vorgegebenen Winkel zu der Zentralachse angeordnete Spiegel zum Betrachten der entlang der Zentralachse der Spiegelanordnung angeordneten Kabelspitze aus unterschiedlichen Blickwinkeln umfasst, wobei die Überprüfungsvorrichtung ferner eine Kamera zum Erzeugen von Bildern der Kabelspitze aus unterschiedlichen Blickwinkeln mittels der Spiegel umfasst, dadurch gekennzeichnet, dass die Überprüfungsvorrichtung eine durchsichtige Scheibe aufweist, die zum Verhindern des Gelangens von Schmutz und/oder Staub aus der Spiegelanordnung zu der Kamera derart angeordnet ist, dass auf einer ersten Seite der Scheibe die Spiegelanordnung angeordnet ist und auf einer zweiten der ersten Seite gegenüberliegenden Seite der Scheibe die Kamera angeordnet ist, und dass die Überprüfungsvorrichtung ferner eine Druckluftreinigungsvorrichtung zum Reinigen der Scheibe und/oder der Spiegel mittels Druckluft aufweist, wobei die Druckluftreinigungsvorrichtung zum Ausstoßen der Druckluft entlang der Scheibe und/oder entlang zumindest einem Teil der Spiegel ausgebildet ist.

Vorteilhaft hieran ist, dass durch die Scheibe Schmutz und/oder Staub (insbesondere Ruß oder ähnliches, der z.B. durch Laserschneiden des Kabels entstanden ist), der durch das Kabel in die Überprüfungsvorrichtung eingebracht wird bzw. wurde, aufgrund der Scheibe typischerweise nicht zur Kamera gelangen kann. Somit ist diese im Allgemeinen technisch einfach vor Schmutz bzw. Staub von dem Kabel bzw. der Kabelspitze geschützt. Zudem lassen sich die Scheibe und/oder die Spiegel typischerweise technisch einfach und schnell reinigen.

Gemäß einem zweiten Aspekt der Erfindung wird ein Verfahren zum Reinigen einer Spiegelanordnung der vorstehend beschriebenen Überprüfungsvorrichtung vorgeschlagen, wobei die Spiegelanordnung eine Vielzahl von Spiegel umfasst, und/oder einer durchsichtigen Scheibe einer Überprüfungsvorrichtung, wobei die Überprüfungsvorrichtung ferner eine Kamera zum Erzeugen von Bildern der Kabelspitze aus unterschiedlichen Blickwinkeln mittels der Spiegel umfasst, wobei die Spiegelanordnung mehrere in einem vorgegebenen Winkel zueinander und in einem vorgegebenen Winkel zu einer Zentralachse der Spiegelanordnung angeordnete Spiegel zum Betrachten der entlang der Zentralachse der Spiegelanordnung angeordneten Kabelspitze aus unterschiedlichen Blickwinkeln umfasst,
wobei die durchsichtige Scheibe zum Verhindern des Gelangens von Schmutz und/oder Staub aus der Spiegelanordnung zu der Kamera derart angeordnet ist,
dass auf einer ersten Seite der Scheibe die Spiegelanordnung angeordnet ist und auf einer zweiten der ersten Seite gegenüberliegenden Seite der Scheibe die Kamera angeordnet ist,
wobei das Verfahren folgenden Schritt umfasst: Ausstoßen von Druckluft aus einer Druckluftreinigungsvorrichtung entlang der Scheibe und/oder entlang zumindest eines Teils des Spiegels zum Entfernen von Staub und/oder Schmutz von der Scheibe und/oder den Spiegeln.

Vorteilhaft an diesem Verfahren ist, dass eine Scheibe, die Schmutz und/oder Staub (insbesondere Ruß oder ähnliches, der z.B. durch Laserschneiden des Kabels entstanden ist), der durch das Kabel in die Überprüfungsvorrichtung eingebracht wird bzw. wurde, von der Kamera fernhält, typischerweise technisch einfach und schnell gereinigt wird. Zudem werden die Spiegel üblicherweise technisch einfach und schnell gereinigt. Mögliche Merkmale und Vorteile von Ausführungsformen der Erfindung können unter anderem und ohne die Erfindung einzuschränken als auf nachfolgend beschriebenen Ideen und Erkenntnissen beruhend angesehen werden.

Gemäß der Erfindung ist die Überprüfungsvorrichtung derart ausgebildet, dass die Druckluftreinigungsvorrichtung ohne Öffnen eines Gehäuses der Überprüfungsvorrichtung, das den Bereich auf der ersten Seite und/oder der zweiten Seite der Scheibe vor dem Eindringen von Schmutz und/oder Staub aus der Umgebung schützt, aus der Überprüfungsvorrichtung entnehmbar und wieder in die Überprüfungsvorrichtung einsetzbar ist. Vorteilhaft hieran ist, dass typischerweise beim Entnehmen bzw. beim Einsetzen kein weiterer Schmutz bzw. Dreck in das Gehäuse bzw. die Spiegelanordnung gelangt. Zudem lässt sich die Druckluftreinigungsvorrichtung im Allgemeinen technisch einfach durch eine andere Einrichtung ersetzen.

Gemäß einer Ausführungsform ist die Überprüfungsvorrichtung derart ausgebildet, dass, wenn die Druckluftreinigungsvorrichtung in die Überprüfungsvorrichtung eingesetzt oder die Druckluftreinigungsvorrichtung in der Überprüfungsvorrichtung angeordnet ist, ein in Bezug auf die Überprüfungsvorrichtung stationär angeordneter Druckluftkanal zum Versorgen der Druckluftreinigungsvorrichtung mit Druckluft mit der Druckluftreinigungsvorrichtung fluidverbunden ist. Hierdurch kann die Druckluftzufuhr in der Regel technisch einfach mit der Druckluftreinigungsvorrichtung derart verbunden, dass Druckluft durch die Druckluftzufuhr in die Druckluftreinigungsvorrichtung gelangt. Folglich muss die Druckluftreinigungsvorrichtung typischerweise kein aktives Element aufweisen. Somit kann die Druckluftreinigungsvorrichtung üblicherweise technisch besonders einfach, zuverlässig und kostengünstig ausgebildet sein.

Gemäß einer Ausführungsform ist die von der Druckluftreinigungsvorrichtung ausgestoßene Druckluft ionisierte Druckluft. Vorteilhaft hieran ist, dass im Allgemeinen die Reinigungswirkung bzw. Reinigungsleistung der Druckluftreinigungsvorrichtung besonders hoch ist.

Gemäß einer Ausführungsform ist die Überprüfungsvorrichtung derart ausgebildet, dass eine Kabelaufnahmeöffnung zum Einführen der Kabelspitze in die Spiegelanordnung entlang der Zentralachse durch eine Kabelzentrierung zum Halten des Kabels bis auf eine Öffnung der Kabelzentrierung zum Aufnehmen und Halten des Kabels verschließbar ist. Hierdurch kann die von der Druckluftreinigungsvorrichtung ausgestoßene Druckluft typischerweise technisch einfach derart in der Spiegelanordnung geführt werden, dass die Druckluft nach dem Strömen entlang eines ersten Spiegels an der Kabelaufnahmeöffnung umgelenkt wird, so dass die Druckluft nach dem Umlenken an zumindest einem weiteren zweiten Spiegel entlang strömt.

Gemäß einer Ausführungsform ist die Überprüfungsvorrichtung derart ausgebildet, dass ein Kalibrierungselement, insbesondere eine Graukarte, zum Kalibrieren der Kamera ohne Öffnen eines Gehäuses der Überprüfungsvorrichtung, das den Bereich auf der ersten Seite und/oder der zweiten Seite der Scheibe vor dem Eindringen von Schmutz und/oder Staub aus der Umgebung schützt, derart in die Überprüfungsvorrichtung, insbesondere auf der ersten Seite der Scheibe, vorzugsweise in eine Öffnung zum Aufnehmen der Druckluftreinigungsvorrichtung, einführbar ist, dass zumindest ein Teil der Spiegel, insbesondere alle Spiegel, der Spiegelanordnung durch das Kalibrierungselement aus Blickrichtung der Kamera gesehen verdeckt sind. Hierdurch kann im Allgemeinen, ohne dass Staub und/oder Schmutz durch das Öffnen des Gehäuses in die Spiegelanordnung gelangt, die Kamera kalibriert werden. Insbesondere wenn eine Farbkamera als Kamera verwendet wird, sollte in regelmäßigen Abständen die Kamera typischerweise hinsichtlich der Farbe kalibriert werden. Die Graukarte kann typischerweise in die gleiche Aussparung der Überprüfungsvorrichtung, in die die Druckluftreinigungsvorrichtung eingesetzt werden kann, eingesetzt bzw. eingeführt werden. Dies verhindert üblicherweise noch effizienter das Eindringen von Staub und/oder Schmutz in die Spiegelanordnung, da die Öffnung zum Aufnehmen der Druckluftreinigungsvorrichtung bzw. des Kalibrierungselements zu jeder Zeit verschlossen sein kann, nämlich entweder von der Druckluftreinigungsvorrichtung, wenn gerade keine Kalibrierung durchgeführt werden muss, oder dem Kalibrierungselement, wenn ein Kalibrierungsvorgang aktuell durchgeführt wird.

Gemäß einer Ausführungsform weist die Überprüfungsvorrichtung ferner eine Abführöffnung zum Abführen der Druckluft aus einem Inneren der Spiegelanordnung auf, wobei insbesondere die Abführöffnung bezüglich der Zentralachse gegenüber der Druckluftreinigungsvorrichtung angeordnet ist. Vorteilhaft hieran ist, dass die Druckluft zusammen mit Staub und/oder Schmutz typischerweise technisch einfach aus der Spiegelanordnung bzw. der Überprüfungsvorrichtung befördert werden kann. Hierdurch steigt im Allgemeinen die Reinigungseffizienz durch die Druckluft.

Gemäß einer Ausführungsform ist die Druckluftreinigungsvorrichtung derart ausgebildet, dass die Druckluftreinigungsvorrichtung die Druckluft zum Reinigen der Spiegel in Richtung einer Kabelaufnahmeöffnung zum Einführen der Kabelspitze in die Spiegelanordnung ausstößt. Vorteilhaft hieran ist, dass die Spiegel üblicherweise technisch einfach und effizient gereinigt werden können, da bei geschlossener Kabelaufnahmeöffnung die Druckluft umgelenkt wird und entlang eines weiteren Spiegels, insbesondere in Richtung der Abführöffnung (sofern vorhanden), strömen kann.

Gemäß einer Ausführungsform ist die Druckluftreinigungsvorrichtung einstückig, insbesondere mittels eines Metalldruckverfahrens und/oder mittels 3D-Drucks, hergestellt. Vorteilhaft hieran ist, dass die Druckluftreinigungsvorrichtung üblicherweise besonders kostengünstig und einfach handhabbar ist.

Gemäß einer Ausführungsform ist die Druckluftreinigungsvorrichtung mehrteilig ausgebildet und/oder ist mittels eines Gussverfahrens hergestellt. Hierdurch ist die Überprüfungsvorrichtung in der Regel besonders kostengünstig herstellbar.

Gemäß einer Ausführungsform weist die Druckluftreinigungsvorrichtung mehrere Druckluftführungskanäle zum Führen der Druckluft in der Druckluftreinigungsvorrichtung auf, wobei, wenn die Druckluftreinigungsvorrichtung in der Überprüfungsvorrichtung eingesetzt oder angeordnet ist, zwei der Druckluftführungskanäle zum Ausstoßen der Druckluft entlang der Scheibe angeordnet sind und drei der Druckluftführungskanäle zum Ausstoßen der Druckluft entlang eines Spiegels oder mehrerer Spiegel der Spiegelanordnung angeordnet sind. Vorteilhaft hieran ist, dass üblicherweise technisch einfach gleichzeitig die Scheibe und die Spiegel gesäubert werden können. Die Druckluft kann üblicherweise insbesondere entlang mehrerer, insbesondere zueinander unmittelbar benachbarter, Spiegel ausgestoßen werden, so dass eine Vielzahl von Spiegeln gleichzeitig gereinigt wird.

Gemäß einer Ausführungsform besteht die Scheibe aus bruchfestem Glas und/oder bruchfestem Kunststoff. Hierdurch ist die Überprüfungsvorrichtung in der Regel besonders stabil. Ein Zerstören bzw. Beschädigen der Scheibe wird hierdurch typischerweise im Wesentlichen verhindert.

Gemäß einer Ausführungsform weist die Überprüfungsvorrichtung ferner eine Beleuchtungsvorrichtung zum Beleuchten der entlang der Zentralachse angeordneten Kabelspitze auf, wobei die Beleuchtungsvorrichtung eine Vielzahl entlang einer Ellipse, insbesondere entlang eines Kreises, angeordnete Leuchtmittel, wobei die Leuchtmittel jeweils eine Hauptabstrahlrichtung haben, die von der Spiegelanordnung weg gerichtet ist, und einen Reflektor zum Reflektieren des von den Leuchtmitteln abgestrahlten Lichts aufweist. Hierdurch kann die Kabelspitze in der Regel technisch einfach ohne Schatten und/oder Glanzstellen ausgeleuchtet bzw. beleuchtet werden.

Gemäß einer Ausführungsform weist der Reflektor die Form eines Rotationsparaboloids auf. Vorteilhaft hieran ist typischerweise, dass die Kabelspitze besonders gleichmäßig ausgeleuchtet werden kann.

Es wird darauf hingewiesen, dass einige der möglichen Merkmale und Vorteile der Erfindung hierin mit Bezug auf unterschiedliche Ausführungsformen der Überprüfungsvorrichtung beschrieben sind. Ein Fachmann erkennt, dass die Merkmale in geeigneter Weise im Schutzbereich der erteilten Patentansprüche kombiniert, angepasst oder ausgetauscht werden können, um zu weiteren Ausführungsformen der Erfindung zu gelangen.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
- Fig. 1 zeigt: eine perspektivische teilweise aufgeschnittene Ansicht einer Ausführungsform der erfindungsgemäßen Überprüfungsvorrichtung;
- Fig. 2a zeigt: eine perspektivische Ansicht der Überprüfungsvorrichtung aus Fig. 1 mit Gehäuse bzw. Abdeckung;
- Fig. 2b zeigt: eine perspektivische Ansicht der Überprüfungsvorrichtung aus Fig. 1 bzw. Fig. 2a ohne Gehäuse bzw. Abdeckung;
- Fig. 3a zeigt: den Schnittverlauf der Schnittansicht von Fig. 3b;
- Fig. 3b zeigt: eine Schnittansicht der Überprüfungsvorrichtung aus Fig. 1 bzw. Fig. 2a bzw. Fig. 2b entlang der Linie B-B der Fig. 3a;
- Fig. 4 zeigt: eine perspektivische Ansicht der Überprüfungsvorrichtung aus Fig. 1 bzw. Fig. 2a bzw. Fig. 2b bzw. Fig. 3a bzw. Fig. 3b mit der nichteingesteckten Graukarte und der nichteingesteckten Druckluftreinigungsvorrichtung;
- Fig. 5a zeigt: eine Seitenansicht der Druckluftreinigungsvorrichtung;
- Fig. 5b zeigt: eine Aufsicht auf die Druckluftreinigungsvorrichtung;
- Fig. 5c zeigt: eine Schnittansicht der Druckluftreinigungsvorrichtung entlang der Linie C-C der Fig. 5b;
- Fig. 5d zeigt: eine Schnittansicht der Druckluftreinigungsvorrichtung entlang der Linie D-D der Fig. 5a;
- Fig. 6 zeigt: eine perspektivische Ansicht der Überprüfungsvorrichtung aus Fig. 1 bzw. Fig. 2a bzw. Fig. 2b bzw. Fig. 3a bzw. Fig. 3b bzw. Fig. 4 ohne Gehäuse bzw. Abdeckung mit der eingesteckten Graukarte;
- Fig. 7 zeigt: eine Aufsicht auf die Graukarte der Überprüfungsvorrichtung aus Fig. 2a bzw. Fig. 4 bzw. Fig. 6;
- Fig. 8 zeigt: ein mit der Überprüfungsvorrichtung aus Fig. 1-4 bzw. Fig. 6 aufgenommenes Bild der Kabelspitze.

Die Figuren sind lediglich schematisch und nicht maßstabsgetreu. Gleiche Bezugszeichen bezeichnen in den verschiedenen Figuren gleiche oder gleichwirkende Merkmale

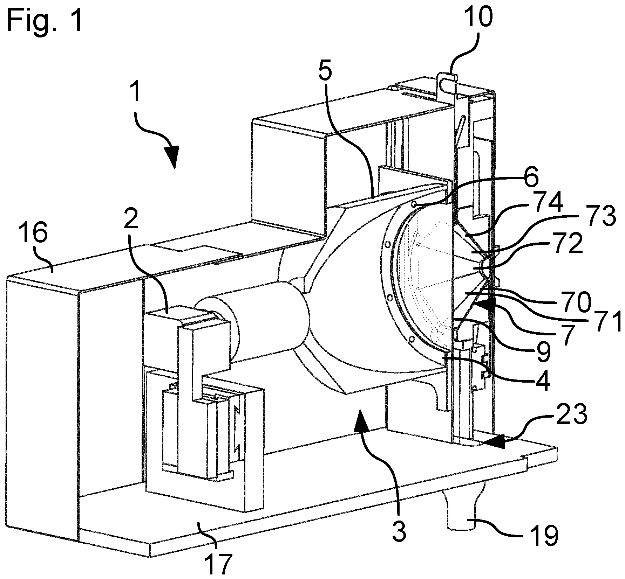

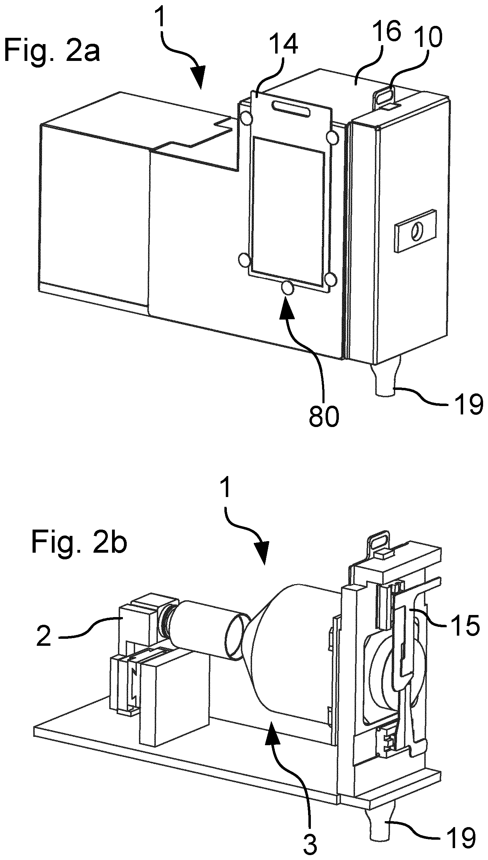

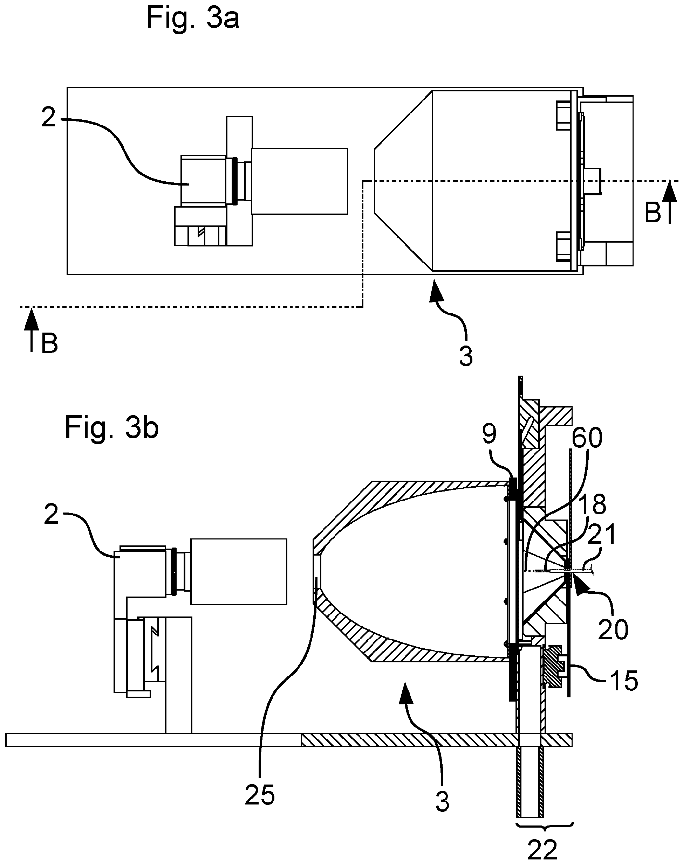

Fig. 1 zeigt eine perspektivische teilweise aufgeschnittene Ansicht einer Ausführungsform der erfindungsgemäßen Überprüfungsvorrichtung 1. Fig. 2a zeigt eine perspektivische Ansicht der Überprüfungsvorrichtung 1 aus Fig. 1 mit Gehäuse 16 bzw. Abdeckung. Fig. 2b zeigt eine perspektivische Ansicht der Überprüfungsvorrichtung 1 aus Fig. 1 bzw. Fig. 2a ohne Gehäuse 16 bzw. Abdeckung. Fig. 3a zeigt den Schnittverlauf der Schnittansicht von Fig. 3b. Fig. 3b zeigt eine Schnittansicht der Überprüfungsvorrichtung 1 aus Fig. 1 bzw. Fig. 2a bzw. Fig. 2b entlang der Linie B-B der Fig. 3a.

Die Überprüfungsvorrichtung 1 ist zum Überprüfen bzw. Inspizieren einer Kabelspitze 18 bzw. eines Kabelendes eines Kabels 21 ausgebildet. Hierzu weist die Überprüfungsvorrichtung 1 eine Spiegelanordnung 22, eine Beleuchtungsvorrichtung 3 und eine Kamera 2 auf. Diese Elemente sind auf einer Grundplatte 17 angeordnet.

Das Kabel 21 bzw. die Kabelspitze 18 wird in die Spiegelanordnung 22 entlang einer Zentralachse 60 der Spiegelanordnung 22, die horizontal verläuft, durch eine Kabelaufnahmeöffnung 20 eingeführt. Das Kabel 21 wird mittels einer Kabelzentrierung 15 in dieser Position gehalten.

Die Kabelzentrierung 15 weist einen ersten vertikal beweglichen Parallelgreifer 40, der zwei Klemmplatten 41, 42 aufeinander zu bewegen kann, und einen zweiten horizontal beweglichen Parallelgreifer 50, der ebenfalls zwei Klemmplatten 51, 52 aufeinander zu bewegen kann, auf. Durch die vier Klemmplatten 41, 42, 51, 52 wird das Kabel 21 gehalten und gleichzeitig zentriert, so dass das Kabel 21 bzw. die Kabelspitze 18 in der Spiegelanordnung 22 entlang der Zentralachse 60 verläuft.

Die Spiegelanordnung 22 umfasst eine Vielzahl von Spiegeln 70-77 in Form eines Spiegelkragens 7 um die Zentralachse 60 bzw. die Kabelspitze 18.

Die Spiegel 70-77 der Spiegelanordnung 22 sind jeweils in einem gleichen Winkel zueinander angeordnet und umgeben die Zentralachse 60 vollständig. Beispielsweise kann die Spiegelanordnung 22 acht Spiegel 70-77 umfassen, so dass jeder Spiegel 70-77 jeweils in einem Winkel von 360°/8 = 45° zu dem unmittelbar benachbarten Spiegel 70-77 ausgerichtet ist. Es ist auch denkbar, dass die Spiegelanordnung 22 nur fünf oder sechs Spiegel 70-77 umfasst, die die Kabelspitze 18 vollständig umgeben.

Zudem sind die Spiegel 70-77 derart angeordnet, dass sie konisch auf die Kabelaufnahmeöffnung 20 zulaufen, d.h. der Abstand der Spiegel 70-77 zu der Zentralachse 60 wird kleiner je mehr man sich auf die Kabelaufnahmeöffnung 20 zubewegt.

Die Spiegel 70-77 weisen jeweils einen Winkel von ca. 45° zu der Zentralachse 60 auf. Die Spiegel 70-77 sind jeweils in Aufsicht trapezförmig ausgebildet.

Ein oder mehrere Spiegel 70-77 können jeweils Distanzmarkierungen aufweisen, um als Bezug für Messoperationen bei der Auswertung der von der Kamera 2 aufgenommenen Bilder zu dienen.

Die Spiegelanordnung 22, die Scheibe 9 und die Kabelzentrierung 15, die die Kabelaufnahmeöffnung 20 fast vollständig verschließt, begrenzen gemeinsam das Innere bzw. den Innenraum der Spiegelanordnung 22.

Die Beleuchtungsvorrichtung 3 umfasst einen Reflektor 5 in Form eines Rotationsparaboloids auf, der eine Sichtöffnung 25 für die Kamera 2 aufweist. **In** Fig. 3b befindet sich die Sichtöffnung 25 auf der linken Seite, d.h. der der Spiegelanordnung 22 abgewandten Seite des Reflektors 5.

Die Beleuchtungsvorrichtung 3 umfasst zudem eine Ringleuchte 4. Die Ringleuchte 4 ist am inneren Rand des Reflektors 5 an dem der Spiegelanordnung 22 zugewandten Ende (in Fig. 3b das rechte Ende) des Reflektors 5 angeordnet. Die Ringleuchte 4 ist kreisscheibenförmig ausgebildet und weist eine Vielzahl von Leuchtmitteln 6, z.B. LEDs, auf, die über den Umfang der Ringleuchte 4 gleichmäßig verteilt angeordnet sind. Die Leuchtmittel 6 sind derart angeordnet, dass sie parallel zu der Zentralachse 60 weg von der Spiegelanordnung 22 ihre Hauptabstrahlrichtung haben. Hierdurch gelangt das abgestrahlte Licht auf den Reflektor 5 und anschließend zu der Kabelspitze 18, die somit von vielen Seiten beleuchtet bzw. ausgeleuchtet wird.

Der Reflektor 5 bzw. die innere Oberfläche des Reflektors 5 kann aus einem weißen Kunststoff (z.B. Polytetrafluorethylen (PTFE) oder Polyoxymethylen (POM)) und/oder eine weiße Oberfläche bzw. Farbschicht aufweisen. Die innere Oberfläche, die zum Reflektieren des Lichts von den Leuchtmitteln 6 ausgebildet ist, ist rau ausgeführt, um eine gute Streuung des Lichts zu erreichen. Die innere Oberfläche des Reflektors 5 ist aufgrund ihrer Rauheit und aufgrund ihrer Funktion als reflektierende Fläche besonders empfindlich für Schmutz. Daher ist es besonders wichtig, Schmutz von der inneren Oberfläche des Reflektors 5 fernzuhalten. Die Leuchtmittel 6 strahlen alle in Richtung des Reflektors 5.

Die Blickrichtung der Kamera 2 verläuft entlang der Zentralachse 60. Die Kamera 2 nimmt über Reflexionen der Spiegel 70-77, die um die Kabelspitze 18 herum angeordnet sind, Bilder bzw. Aufnahmen der Kabelspitze 18 aus unterschiedlichen Blickwinkeln auf. Die Anzahl der Blickwinkel hängt von der Anzahl der Spiegel 70-77 ab. Es ist auch möglich, dass die Kamera 2 nur ein Bild aufnimmt, das in mehrere Bilder, nämlich ein Bild pro Spiegel 70-77, aufgeteilt wird bzw. ist. Möglich ist auch, dass für jeden Spiegel 70-77 ein separates Bild von der Kamera 2 aufgenommen wird.

Die Kamera 2 ist mit einem Auswertungssystem (nicht gezeigt) verbunden. Das Auswertungssystem umfasst z.B. einen Computer mit Auswertungssoftware, wobei die Auswertungssoftware die Bilder der Kabelspitze 18 aus den unterschiedlichen Blickwinkeln analysiert. Die Auswertungssoftware kann eine Bilderkennungsoftware umfassen oder sein. Die Auswertungssoftware kann z.B. Ungleichmäßigkeiten und/oder Asymmetrien und/oder sonstige Fehler, wie z.B. herausgezogene und/oder abgespreizte Litzen des Kabels 21 bzw. der Kabelspitze 18, erkennen. Wenn ein oder mehrere Fehler und/oder Qualitätsmängel von der Auswertungssoftware erkannt wurden, kann eine entsprechende Fehlermeldung erzeugt werden. Auf die Fehlermeldung hin kann z.B. das Kabel 21 als Ausschuss entsorgt werden, die Produktion weiterer Kabel kann vorläufig bis zu einer manuellen Freigabe gestoppt werden oder ähnliches. Auch eine reine Aufzeichnung der festgestellten Variablen kann stattfinden.

Das Kabel 21 kann vor und/oder nach einem Verarbeiten des Kabels 21 mit einer Kabelverarbeitungsmaschine (z.B. einer Crimpmaschine) mittels der Überprüfungsvorrichtung 1 untersucht bzw. überprüft bzw. inspiziert werden, um durchgeführte Veränderungen des Kabels 21 durch die Kabelverarbeitungsmaschine festzustellen.

Die Kamera 2 kann eine digitale Fotokamera oder digitale Videokamera sein.

Zwischen dem Reflektor 5 und der Spiegelanordnung 22 ist eine durchsichtige Scheibe 9 angeordnet, die senkrecht zur Zentralachse 60 verläuft. Die Scheibe 9 trennt, insbesondere im Wesentlichen luftdicht, die Spiegelanordnung 22 von dem Reflektor 5 und der Kamera 2. Somit kann kein Schmutz und/oder Dreck aus der Spiegelanordnung 22 bzw. vom Kabel 21 bzw. der Kabelspitze 18 in den Reflektor 5 und/oder zur Kamera 2 gelangen. Die Spiegelanordnung 22 und der Reflektor 5/die Kamera 2 befinden sich somit auf zwei zueinander gegenüberliegenden Seiten der Scheibe 9.

Ein Gehäuse 16 der Überprüfungsvorrichtung 1 umschließt die Komponenten bzw. Bestandteile der Überprüfungsvorrichtung 1 (d.h. Kamera 2, Reflektor 5, Scheibe 9 und Spiegelanordnung 22), so dass diese vor Staub und/oder Schmutz geschützt sind. Bei geschlossenem Gehäuse 16 verbleibt nur die Kabelaufnahmeöffnung 20, durch die Staub und/oder Schmutz in die Überprüfungsvorrichtung 1 eindringen kann.

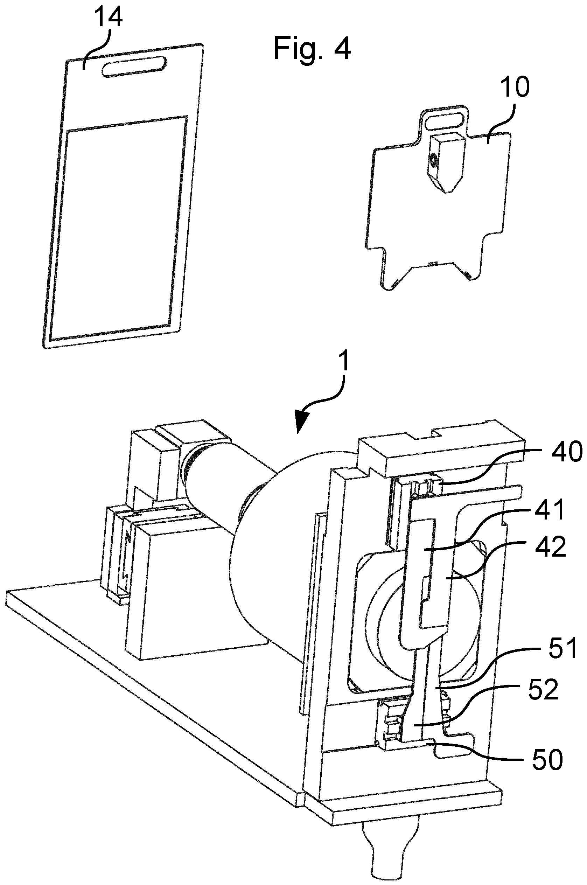

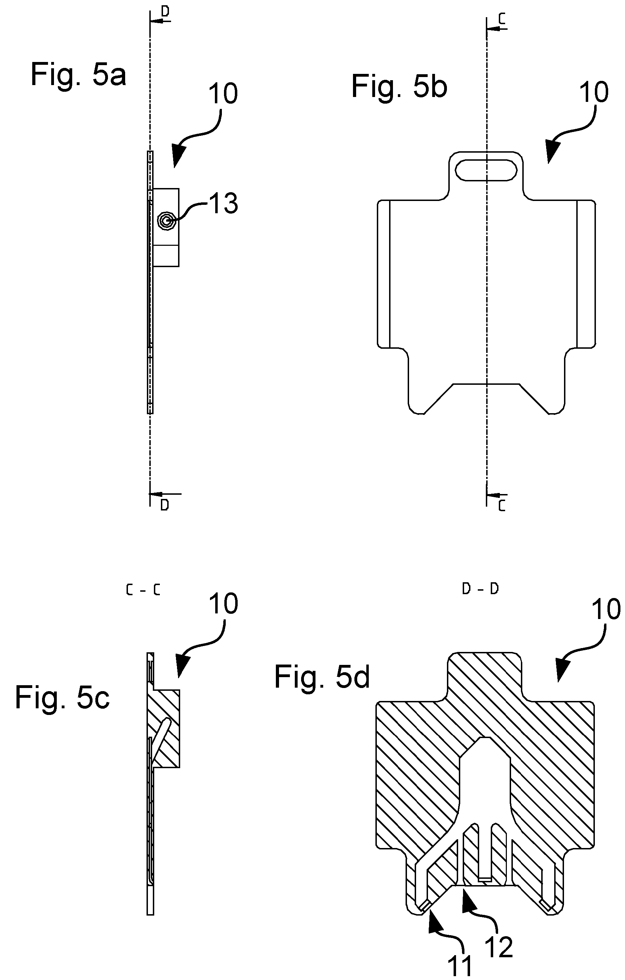

Fig. 4 zeigt eine perspektivische Ansicht der Überprüfungsvorrichtung 1 aus Fig. 1 bzw. Fig. 2a bzw. Fig. 2b bzw. Fig. 3a bzw. Fig. 3b mit der nichteingesteckten Graukarte 14 und der nichteingesteckten Druckluftreinigungsvorrichtung 10. Fig. 5a zeigt eine Seitenansicht der Druckluftreinigungsvorrichtung 10. Fig. 5b zeigt eine Aufsicht auf die Druckluftreinigungsvorrichtung 10. Fig. 5c zeigt eine Schnittansicht der Druckluftreinigungsvorrichtung 10 entlang der Linie C-C der Fig. 5b. Fig. 5d zeigt eine Schnittansicht der Druckluftreinigungsvorrichtung 10 entlang der Linie D-D der Fig. 5a.

Die Überprüfungsvorrichtung 1 umfasst zudem eine Druckluftreinigungsvorrichtung 10. Die Druckluftreinigungsvorrichtung 10 ist zum Reinigen der Scheibe 9 und der Spiegelanordnung 22 von Schmutz und/oder Dreck mittels Druckluft ausgebildet. Das Kabel 21 kann z.B. mittels Lasers abisoliert sein, wodurch Rußpartikel entstehen können, die sich auch auf der Kabelspitze 18 festsetzen können und vor dem Einbringen der Kabelspitze 18 in die Überprüfungsvorrichtung 1 nicht entfernt wurden.

Die Druckluftreinigungsvorrichtung 10 ist in eine Aussparung der Überprüfungsvorrichtung 1 einführbar bzw. in die Druckluftreinigungsvorrichtung 10 einsetzbar und aus der Druckluftreinigungsvorrichtung 10 wieder entnehmbar. Die Druckluftreinigungsvorrichtung 10 wird zum Einsetzen von oben nach unten zwischen die Scheibe 9 und den Spiegelkragen 7 bzw. die Spiegelanordnung 22 geschoben. Die mehreren Auslässe 11, 12 der Druckluftreinigungsvorrichtung 10 ragen minimal über die Kante des Spiegelkragens 7 und sind entweder parallel zu den Oberflächen der Spiegel 70-77 und/oder zu der Oberfläche der Scheibe 9 ausgerichtet.

Die Druckluftreinigungsvorrichtung 10 dient zum Reinigen der Scheibe 9 und der Spiegel 70-77 per Druckluft. Wenn die Druckluftreinigungsvorrichtung 10 in die Überprüfungsvorrichtung 1 eingesetzt ist, ist die Druckluftreinigungsvorrichtung 10 bzw. sind die Auslässe 11, 12 der Druckluftreinigungsvorrichtung 10 mit einem stationär angeordneten Druckluftkanal 13 fluidverbunden. Beim Entfernen der Druckluftreinigungsvorrichtung 10 aus der Überprüfungsvorrichtung 1 wird die Fluidverbindung wieder getrennt. Ein Zuluftkanal der Druckluftreinigungsvorrichtung 10, der sich in einem seitlichen Bereich der Druckluftreinigungsvorrichtung 10 befindet, kann zur luftdichten Verbindung mit dem stationär angeordneten Druckluftkanal 13 eine Dichtung aufweisen. Über den Druckluftkanal 13 wird Druckluft bzw. Luft in die Druckluftreinigungsvorrichtung 10 eingebracht.

Die Druckluftreinigungsvorrichtung 10 weist mehrere Druckluftführungskanäle zum Führen der Druckluft in der Druckluftreinigungsvorrichtung 10 bzw. zum Ausstoßen der Druckluft bzw. Luft aus der Druckluftreinigungsvorrichtung 10 in verschiedene Richtungen auf.

Ein Teil der Druckluft wird entlang der Scheibe 9 von oben nach unten aus der Druckluftreinigungsvorrichtung 10 ausgestoßen. Hierzu verlaufen die in Fig. 5d beiden zweitäußersten Druckluftkanäle von oben nach unten, d.h. die jeweilige Öffnung zeigt nach unten.

Drei der Druckluftkanäle der Druckluftreinigungsvorrichtung 10, in Fig. 5d die beiden äußeren Druckluftkanäle und der mittlere Druckluftkanal, sind zum Ausstoßen der Druckluft jeweils entlang eines Spiegels 70-77 ausgebildet. Die Druckluft aus jeder dieser drei Druckluftkanäle wird somit in Richtung der Kabelaufnahmeöffnung 20 ausgestoßen. Wenn die Kabelaufnahmeöffnung 20 durch die Kabelzentrierung 15 bis auf eine Öffnung zum Aufnehmen bzw. Halten des Kabels 21 verschlossen ist, wird die Druckluft bzw. Luft durch die Kabelzentrierung 15 anschließend "reflektiert" und strömt daraufhin entlang eines Spiegels 70-77 oder mehrerer Spiegel 70-77 in der unteren Hälfte der Spiegelanordnung 22 bzw. entlang eines Spiegels 70-77 oder mehrerer Spiegel 70-77, die sich von oben nach unten erstrecken, wenn man sich von der Scheibe 9 aus von der Kabelaufnahmeöffnung 20 weg bewegt.

Die Druckluft in der Druckluftreinigungsvorrichtung 10 wird mittels der Druckluftkanäle gabelförmig aufgeteilt.

Das Ausstoßen von Druckluft durch die Druckluftreinigungsvorrichtung 10 kann kontinuierlich durchgeführt werden.

Es ist jedoch auch möglich, dass die Druckluft nicht kontinuierlich ausgestoßen wird, sondern nur zeitweise. Die Zeiträume zwischen dem Ausstoßen von Druckluft und die Länge des Ausstoßens der Druckluft können vorgegeben sein oder von der Stärke bzw. dem Vorhandensein von Verschmutzung der Spiegelanordnung 22 und/oder der Scheibe 9 abhängig sein.

Auf der unteren Seite weist die Überprüfungsvorrichtung 1 eine Abführöffnung 23 auf. Durch die Abführöffnung 23 kann die von der Druckluftreinigungsvorrichtung 10 ausgestoßene Luft, die entlang der Scheibe 9 bzw. entlang der Spiegel 70-77 geströmt ist, wieder aus der Spiegelanordnung 22 austreten. Hierdurch kann der Staub und/oder Schmutz, der von den Spiegeln 70-77 und/oder der Scheibe 9 entfernt wurde und sich nun in der Luft befindet, aus der Spiegelanordnung 22 entfernt werden. Es ist möglich, dass die Luft durch die Abführöffnung 23 mittels einer Luftabsaugung und einem entsprechenden Anschluss 19 aktiv aus der Spiegelanordnung 22 abgesaugt wird.

Die Druckluftreinigungsvorrichtung 10 kann aus der Überprüfungsvorrichtung 1 entfernt werden bzw. herausgenommen werden. Hierzu wird die Druckluftreinigungsvorrichtung 10 in Fig. 3b nach oben aus der Aussparung der Druckluftreinigungsvorrichtung 10 herausgezogen. Durch das Herausziehen bzw. Bewegen der Druckluftreinigungsvorrichtung 10 nach oben wird die Verbindung zwischen dem stationär angeordneten Druckluftkanal und der Druckluftreinigungsvorrichtung 10 getrennt.

Fig. 4 zeigt die Überprüfungsvorrichtung 1 ohne Abdeckung bzw. mit entfernter Abdeckung und die herausgenommene Druckluftreinigungsvorrichtung 10 sowie einer Graukarte 14.

Die Kamera 2 der Überprüfungsvorrichtung 1 muss in Zeitabständen neu kalibriert werden. Insbesondere wenn die Kamera 2 eine Farbkamera ist, muss die Farbkamera ab und zu hinsichtlich der Farbe neu kalibriert werden. Die Kalibrierung wird mittels eines Kalibrierungselements durchgeführt, das in die Überprüfungsvorrichtung 1 derart eingeschoben wird, dass die Kamera 2 nicht mehr die Spiegelanordnung 22 sieht, sondern stattdessen das Kalibrierungselement im Blickfeld der Kamera 2 ist.

Das Kalibrierungselement kann eine Graukarte 14 sein, d.h. eine flache, in der Aufsicht rechteckige Karte, bei der ein rechteckiger Kalibrierungsbereich 30 eine Oberfläche in einem genau festgelegten Grauton aufweist.

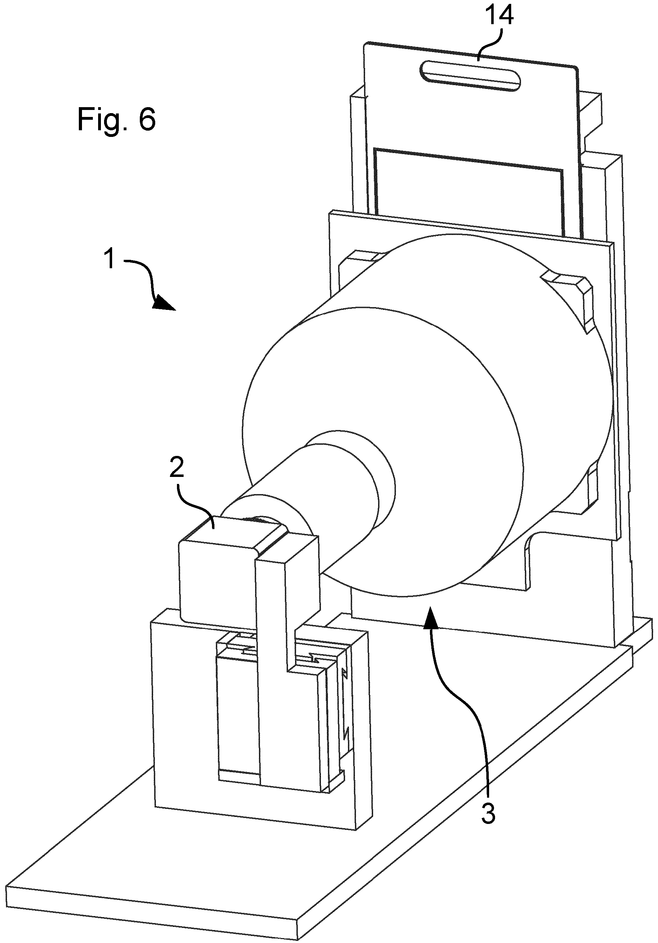

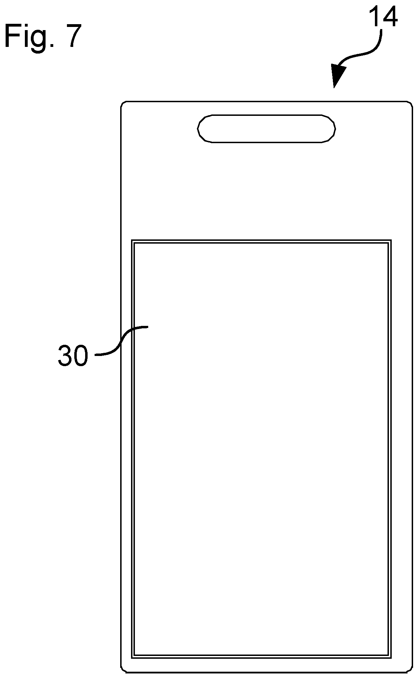

Fig. 6 zeigt eine perspektivische Ansicht der Überprüfungsvorrichtung 1 aus Fig. 1 bzw. Fig. 2a bzw. Fig. 2b bzw. Fig. 3a ohne Gehäuse 16 bzw. Abdeckung mit der eingesteckten Graukarte 14. Fig. 7 zeigt eine Aufsicht auf die Graukarte 14 der Überprüfungsvorrichtung 1aus Fig. 1.

Die Graukarte 14 wird in dieselbe Aussparung gesteckt bzw. eingeführt, in die die Druckluftreinigungsvorrichtung 10 eingeführt werden kann bzw. aus der die Druckluftreinigungsvorrichtung 10 zuvor entnommen wurde. Die Graukarte 14 wird soweit bzw. kann soweit in die Druckluftreinigungsvorrichtung 10 eingeführt werden, dass der Bereich, durch den die Kamera 2 die Spiegel 70-77 der Spiegelanordnung 22 bzw. die Kabelspitze 18 sieht, vollständig von der Graukarte 14 bzw. des Kalibrierungsbereichs 30 der Graukarte 14 verdeckt ist.

Dies bedeutet, dass an der Stelle, an der die Kabelspitze 18 über die Reflexionen der Spiegel 70-77 für die Kamera 2 sichtbar war, nun die Graukarte 14 bzw. der Kalibrierungsbereich 30 für die Kamera 2 zu sehen ist. Mittels des bekannten Farbtons des Kalibrierungsbereichs 30 kann nun die Kamera 2 farblich kalibriert bzw. eingestellt werden.

Die Graukarte 14 weist im oberen Bereich der Graukarte 14 eine ovale Aussparung zum leichteren Entnehmen der Graukarte 14 aus der Überprüfungsvorrichtung 1 auf.

Das Gehäuse 16 weist auf seiner Außenseite eine Halterung 80 zum Halten der Graukarte 14 auf, wenn die Graukarte 14 nicht in die Überprüfungsvorrichtung 1 eingesteckt ist bzw. verwendet wird. Die Halterung 80 kann fünf kreisrunde von dem Gehäuse 16 hervorstehende Scheiben umfassen.

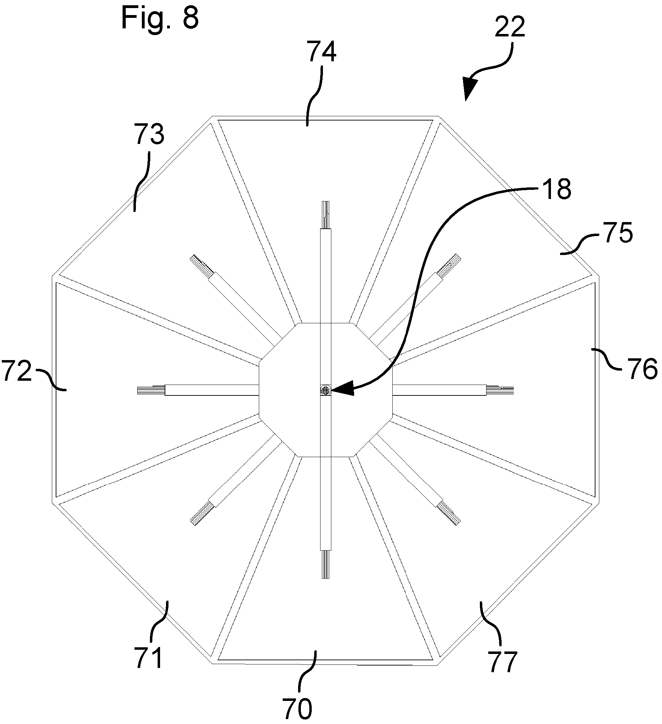

Fig. 8 zeigt ein mit der Überprüfungsvorrichtung 1 aus Fig. 1-4 bzw. Fig. 6 aufgenommenes Bild der Kabelspitze 18. In Fig. 8 sind acht Spiegel 70-77 derart angeordnet, dass die Spiegel 70-77 jeweils auf den Uhrzeigerpositionen 6 Uhr, 7 Uhr 30, 9 Uhr, 10 Uhr 30, 12 Uhr, 1 Uhr 30, 3 Uhr, 4 Uhr 30 angeordnet sind. In Fig. 8 ist gut zu erkennen, wie die acht Spiegel 70-77 der Spiegelanordnung 22 unterschiedliche Ansichten der Kabelspitze 18 bzw. des Kabels 21 bzw. Ansichten aus unterschiedlichen Blickwinkeln liefern/ergeben. In der Reflexion bzw. Spiegelung der Kabelspitze 18 des rechten Spiegels 76 ("auf 3 Uhr") und des linken Spiegels 72 ("auf 9 Uhr") ist besonders deutlich zu erkennen, dass eine der Litzen des Kabels 21 bzw. der Kabelspitze 18 zu kurz geschnitten ist. In den übrigen Reflexionen bzw. Spiegelungen der anderen Spiegel 70, 71, 73, 74, 75, 77 ist dies schwerer zu erkennen bzw. festzustellen.

Diese Ungleichmäßigkeit der Litzen kann durch die Auswertungssoftware erkannt werden und das Kabel 21 entsprechend als fehlerhaft markiert werden und/oder direkt als Ausschuss aussortiert werden.

Weitere Fehler, die durch die Überprüfungsvorrichtung 1 technisch einfach erkannt bzw. überprüft werden können, sind u.a., dass eine Litze des Kabels 21 herausgezogen ist, dass eine Litze des Kabels 21 abgespreizt ist, dass der vorgenommene Schnitt zum Abisolieren des Kabels 21 zu einer nicht-geraden Abisolierkante geführt hat, dass die Litzen des Kabels 21 schräg abgeschnitten wurden, dass eine Litze des Kabels 21 nicht mit einem Crimpkontakt vercrimpt wurde, ob Litzen in einer Kontrollbohrung des Kabels 21 parallel zueinander verlaufen, ob ein Kontaktelement, z.B. ein Crimpelement, das mit dem Kabel 21 verbunden wurde, vollständig entlang der Zentralachse 60 verläuft oder nicht (bzw. verbogen ist).

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Der tatsächliche Schutzumfang wird ausschließlich durch die erteilten Patentansprüche definiert. Bezugszeichen in den Ansprüchen sind nicht als Einschränkung anzusehen.

### Bezugszeichenliste

- 1: Überprüfungsvorrichtung Kamera
- 3: Beleuchtungsvorrichtung
- 2 4: Ringleuchte
- 5: Reflektor
- 6: Leuchtmittel
- 7: Spiegelkragen
- 9: Scheibe
- 10: Druckluftreinigungsvorrichtung
- 11: Auslass zum Reinigen der Spiegel
- 12: Auslass zum Reinigen der Scheibe
- 13: Druckluftkanal
- 14: Graukarte
- 15: Kabelzentrierung
- 16: Gehäuse (Abdeckung)
- 17: Grundplatte
- 18: Kabelspitze
- 19: Anschluss für Luftabsaugung
- 20: Kabelaufnahmeöffnung
- 21: Kabel
- 22: Spiegelanordnung
- 23: Abführöffnung
- 25: Sichtöffnung des Reflektors
- 30: Kalibrierungsbereich
- 40: erster Parallelgreifer
- 41, 42: Klemmplatten des ersten Parallelgreifers
- 50: zweiter Parallelgreifer
- 51, 52: Klemmplatten des zweiten Parallelgreifers
- 60: Zentralachse
- 70-77: Spiegel
- 80: Halterung für Graukarte

## Patentansprüche

1. Überprüfungsvorrichtung (1) zum Überprüfen einer Kabelspitze (18) eines Kabels (21), insbesondere eines verarbeiteten Kabels (21), vorzugsweise eines mit einem Crimpkontakt über eine Crimpverbindung verbundenen Kabels (21),
wobei die Überprüfungsvorrichtung (1) eine Spiegelanordnung (22) mit einer Zentralachse (60) aufweist, wobei die Kabelspitze (18) zum Überprüfen der Kabelspitze (18) entlang der Zentralachse (60) in der Spiegelanordnung (22) anordenbar ist,
wobei die Spiegelanordnung (22) mehrere in einem vorgegebenen Winkel zueinander und in einem vorgegebenen Winkel zu der Zentralachse (60) angeordnete Spiegel (70-77) zum Betrachten der entlang der Zentralachse (60) der Spiegelanordnung (22) angeordneten Kabelspitze (18) aus unterschiedlichen Blickwinkeln umfasst,
wobei die Überprüfungsvorrichtung (1) ferner eine Kamera (2) zum Erzeugen von Bildern der Kabelspitze (18) aus unterschiedlichen Blickwinkeln mittels der Spiegel (70-77) umfasst, wobei
die Überprüfungsvorrichtung (1) eine durchsichtige Scheibe (9) aufweist, die zum Verhindern des Gelangens von Schmutz und/oder Staub aus der Spiegelanordnung (22) zu der Kamera (2) derart angeordnet ist, dass auf einer ersten Seite der Scheibe (9) die Spiegelanordnung (22) angeordnet ist und auf einer zweiten der ersten Seite gegenüberliegenden Seite der Scheibe (9) die Kamera (2) angeordnet ist,
**dadurch gekennzeichnet, dass** die Überprüfungsvorrichtung (1) ferner eine Druckluftreinigungsvorrichtung (10) zum Reinigen der Scheibe (9) und/oder der Spiegel (70-77) mittels Druckluft aufweist, wobei die Druckluftreinigungsvorrichtung (10) zum Ausstoßen der Druckluft entlang der Scheibe (9) und/oder entlang zumindest einem Teil der Spiegel (70-77) ausgebildet ist, und dass die Überprüfungsvorrichtung (1) ein Gehäuse (16) umfasst, wobei die Überprüfungsvorrichtung (1) derart ausgebildet ist, dass die Druckluftreinigungsvorrichtung (10) ohne Öffnen des Gehäuses (16) der Überprüfungsvorrichtung (1), das den Bereich auf der ersten Seite und/oder der zweiten Seite der Scheibe (9) vor dem Eindringen von Schmutz und/oder Staub aus der Umgebung schützt, aus der Überprüfungsvorrichtung (1) entnehmbar und wieder in die Überprüfungsvorrichtung (1) einsetzbar ist, wobei die Druckluftreinigungsvorrichtung (10) in eine Öffnung zwischen der Scheibe (9) und der Spiegelanordnung (22) einsetzbar und aus dieser wieder entnehmbar ist.

2. Überprüfungsvorrichtung (1) nach Anspruch 2, wobei
die Überprüfungsvorrichtung (1) derart ausgebildet ist, dass, wenn die Druckluftreinigungsvorrichtung (10) in die Überprüfungsvorrichtung (1) eingesetzt oder die Druckluftreinigungsvorrichtung (10) in der Überprüfungsvorrichtung (1) angeordnet ist, ein in Bezug auf die Überprüfungsvorrichtung (1) stationär angeordneter Druckluftkanal (13) zum Versorgen der Druckluftreinigungsvorrichtung (10) mit Druckluft mit der Druckluftreinigungsvorrichtung (10) fluidverbunden oder -verbindbar ist.

3. Überprüfungsvorrichtung (1) nach einem der vorhergehenden Ansprüche, wobei die Überprüfungsvorrichtung (1) eine Kabelaufnahmeöffnung (20) und eine Kabelzentrierung (15) umfasst, wobei die Überprüfungsvorrichtung (1) derart ausgebildet ist, dass die Kabelaufnahmeöffnung (20) zum Einführen der Kabelspitze (18) in die Spiegelanordnung (22) entlang der Zentralachse (60) durch die Kabelzentrierung (15) zum Halten des Kabels (21) bis auf eine Öffnung der Kabelzentrierung (15) zum Aufnehmen und Halten des Kabels (21) verschließbar ist.

4. Überprüfungsvorrichtung (1) nach einem der vorhergehenden Ansprüche, wobei die Überprüfungsvorrichtung (1) ein Gehäuse (16) umfasst, wobei die Überprüfungsvorrichtung (1) derart ausgebildet ist, dass ein Kalibrierungselement, insbesondere eine Graukarte (14), zum Kalibrieren der Kamera (2) ohne Öffnen des Gehäuses (16) der Überprüfungsvorrichtung (1), das den Bereich auf der ersten Seite und/oder der zweiten Seite der Scheibe (9) vor dem Eindringen von Schmutz und/oder Staub aus der Umgebung schützt, derart in die Überprüfungsvorrichtung (1), insbesondere auf der ersten Seite der Scheibe (9), in die Öffnung zum Aufnehmen der Druckluftreinigungsvorrichtung (10), einführbar ist, dass zumindest ein Teil der Spiegel (70-77), insbesondere alle Spiegel (70-77), der Spiegelanordnung (22) durch das Kalibrierungselement aus Blickrichtung der Kamera (2) gesehen verdeckt sind.

5. Überprüfungsvorrichtung (1) nach einem der vorhergehenden Ansprüche, wobei die Überprüfungsvorrichtung (1) ferner eine Abführöffnung (23) zum Abführen der Druckluft aus einem Inneren der Spiegelanordnung (22) aufweist, wobei insbesondere die Abführöffnung (23) bezüglich der Zentralachse (60) gegenüber der Druckluftreinigungsvorrichtung (10) angeordnet ist.

6. Überprüfungsvorrichtung (1) nach einem der vorhergehenden Ansprüche, wobei die Druckluftreinigungsvorrichtung (10) derart ausgebildet ist, dass die Druckluftreinigungsvorrichtung (10) die Druckluft zum Reinigen der Spiegel (70-77) in Richtung der Kabelaufnahmeöffnung (20) zum Einführen der Kabelspitze (18) in die Spiegelanordnung (22) ausstößt.

7. Überprüfungsvorrichtung (1) nach einem der vorhergehenden Ansprüche, wobei die Druckluftreinigungsvorrichtung (10) einstückig, insbesondere mittels eines Metalldruckverfahrens und/oder mittels 3D-Drucks, hergestellt ist.

8. Überprüfungsvorrichtung (1) nach einem der Ansprüche 1-7, wobei die Druckluftreinigungsvorrichtung (10) mehrteilig ausgebildet ist und/oder mittels eines Gussverfahrens hergestellt ist.

9. Überprüfungsvorrichtung (1) nach einem der Ansprüche 2 - 8, wobei die Druckluftreinigungsvorrichtung (10) mehrere Druckluftführungskanäle zum Führen der Druckluft in der Druckluftreinigungsvorrichtung (10) aufweist, wobei, wenn die Druckluftreinigungsvorrichtung (10) in die Öffnung der Überprüfungsvorrichtung (1) eingesetzt oder angeordnet ist, zwei der Druckluftführungskanäle zum Ausstoßen der Druckluft entlang der Scheibe (9) angeordnet sind und drei der Druckluftführungskanäle zum Ausstoßen der Druckluft entlang eines Spiegels (70-77) oder mehrerer Spiegel (70-77) der Spiegelanordnung (22) angeordnet sind.

10. Überprüfungsvorrichtung (1) nach einem der vorhergehenden Ansprüche, wobei die Scheibe (9) aus bruchfestem Glas und/oder bruchfestem Kunststoff besteht.

11. Überprüfungsvorrichtung (1) nach einem der vorhergehenden Ansprüche,
wobei die Überprüfungsvorrichtung (1) ferner eine Beleuchtungsvorrichtung (3) zum Beleuchten der entlang der Zentralachse (60) angeordneten Kabelspitze (18) aufweist, wobei die Beleuchtungsvorrichtung (3)
eine Vielzahl entlang einer Ellipse, insbesondere entlang eines Kreises, angeordnete Leuchtmittel (6), wobei die Leuchtmittel (6) jeweils eine Hauptabstrahlrichtung haben, die von der Spiegelanordnung (22) weg gerichtet ist, und
einen Reflektor (5) zum Reflektieren des von den Leuchtmitteln (6) abgestrahlten Lichts aufweist.

12. Überprüfungsvorrichtung (1) nach Anspruch **11,** wobei
der Reflektor (5) die Form eines Rotationsparaboloids aufweist.

13. Verfahren zum Reinigen einer Spiegelanordnung (22) einer Überprüfungsvorrichtung (1), wobei die Spiegelanordnung (22) eine Vielzahl von Spiegel (70-77) umfasst, und/oder einer durchsichtigen Scheibe (9) einer Überprüfungsvorrichtung (1), wobei die Überprüfungsvorrichtung (1) eine Überprüfungsvorrichtung (1) nach einem der vorhergehenden Ansprüche ist,
wobei das Verfahren folgenden Schritt umfasst:
Ausstoßen von Druckluft aus einer Druckluftreinigungsvorrichtung (10) entlang der Scheibe (9) und/oder entlang zumindest eines Teils des Spiegels (70-77) zum Entfernen von Staub und/oder Schmutz von der Scheibe (9) und/oder den Spiegeln (70-77).

## Claims

1. Inspection device (1) for inspecting a cable tip (18) of a cable (21), in particular a processed cable (21), preferably a cable (21) connected to a crimp contact via a crimp connection,
the inspection device (1) having a mirror arrangement (22) with a central axis (60), the cable tip (18) being able to be arranged in the mirror arrangement (22) along the central axis (60) for inspecting the cable tip (18),
the mirror arrangement (22) comprising a plurality of mirrors (70-77) arranged at a predetermined angle to one another and at a predetermined angle to the central axis (60) for viewing the cable tip (18) arranged along the central axis (60) of the mirror arrangement (22) from different viewing angles,
the inspection device (1) further comprising a camera (2) for generating images of the cable tip (18) from different viewing angles by means of the mirrors (70-77),
the inspection device (1) having a transparent pane (9) which, to prevent dirt and/or dust from the mirror arrangement (22) from reaching the camera (2), is arranged in such a way that the mirror arrangement (22) is arranged on a first side of the pane (9) and the camera (2) is arranged on a second side of the pane (9) opposite the first side,
**characterized in that** the inspection device (1) further comprises a compressed air cleaning device (10) for cleaning the pane (9) and/or the mirrors (70-77) using compressed air, the compressed air cleaning device (10) being designed to expel the compressed air along the pane (9) and/or along at least some of the mirrors (70-77),
**and in that** the inspection device (1) comprises a housing (16), the inspection device (1) being designed such that the compressed air cleaning device (10) can be removed from the inspection device (1) and reinserted into the inspection device (1) without opening the housing (16) of the inspection device (1), which protects the region on the first side and/or the second side of the pane (9) against the ingress of dirt and/or dust from the environment, the compressed air cleaning device (10) being insertable into an opening between the pane (9) and the mirror arrangement (22) and being removable therefrom.

2. Inspection device (1) according to claim 2, wherein
the inspection device (1) is designed such that, when the compressed air cleaning device (10) is inserted into the inspection device (1) or the compressed air cleaning device (10) is arranged in the inspection device (1), a compressed air channel (13) arranged in a stationary manner with respect to the inspection device (1) for supplying the compressed air cleaning device (10) with compressed air is, or can be, fluidly connected to the compressed air cleaning device (10).

3. Inspection device (1) according to either of the preceding claims, wherein the inspection device (1) has a cable receiving opening (20) and a cable centering device (15), wherein the inspection device (1) is designed such that the cable receiving opening (20) for inserting the cable tip (18) into the mirror arrangement (22) along the central axis (60) can be closed by the cable centering device (15) for holding the cable (21) except for an opening of the cable centering device (15) for receiving and holding the cable (21).

4. Inspection device (1) according to any of the preceding claims, wherein the inspection device (1) comprises a housing (16), wherein the inspection device (1) is designed such that a calibration member, in particular a gray card (14), for calibrating the camera (2) without opening the housing (16) of the inspection device (1), which housing protects the region on the first side and/or the second side of the pane (9) from the ingress of dirt and/or dust from the environment, can be inserted into the inspection device (1), in particular on the first side of the pane (9), in the opening for receiving the compressed air cleaning device (10), in such a manner that at least some of the mirrors (70-77), in particular all the mirrors (70-77) of the mirror arrangement (22) are covered by the calibration member when viewed from the viewing direction of the camera (2).

5. Inspection device (1) according to any of the preceding claims, wherein the inspection device (1) further has a discharge opening (23) for discharging the compressed air from an interior of the mirror arrangement (22), wherein in particular the discharge opening (23) is arranged opposite the compressed air cleaning device (10) with respect to the central axis (60).

6. Inspection device (1) according to any of the preceding claims, wherein the compressed air cleaning device (10) is designed such that the compressed air cleaning device (10) ejects the compressed air for cleaning the mirrors (70-77) in the direction of the cable receiving opening (20) for inserting the cable tip (18) into the mirror arrangement (22).

7. Inspection device (1) according to any of the preceding claims, wherein the compressed air cleaning device (10) is manufactured in one piece, in particular by a metal printing method and/or by 3D printing.

8. Inspection device (1) according to any of claims 1-7, wherein the compressed air cleaning device (10) is designed in several parts and/or is manufactured by a casting method.

9. Inspection device (1) according to any of claims 2 to 8, wherein the compressed air cleaning device (10) has a plurality of compressed air guide channels for guiding the compressed air into the compressed air cleaning device (10), wherein when the compressed air cleaning device (10) is inserted or arranged in the opening of the inspection device (1), two of the compressed air guide channels for ejecting the compressed air are arranged along the pane (9) and three of the compressed air guide channels for ejecting the compressed air are arranged along one mirror (70-77) or a plurality of mirrors (70-77) of the mirror arrangement (22).

10. Inspection device (1) according to any of the preceding claims, wherein the pane (9) consists of shatterproof glass and/or shatterproof plastics material.

11. Inspection device (1) according to any of the preceding claims,
wherein the inspection device (1) further comprises a lighting device (3) for illuminating the cable tip (18) arranged along the central axis (60), wherein the lighting device (3) has
multiple illuminants (6) arranged along an ellipse, in particular along a circle, wherein the illuminants (6) each have a main radiation direction which is directed away from the mirror arrangement (22), and
a reflector (5) for reflecting the light emitted by the illuminants (6).

12. Inspection device (1) according to claim 11, wherein
the reflector (5) has the shape of a paraboloid of revolution.

13. Method for cleaning a mirror arrangement (22) of an inspection device (1), wherein the mirror arrangement (22) comprises multiple mirrors (70-77),
and/or a transparent pane (9) of an inspection device (1), wherein the inspection device (1) is an inspection device (1) according to any of the preceding claims,
wherein the method comprises the following steps:
ejecting compressed air from a compressed air cleaning device (10) along the pane (9) and/or along at least some of the mirrors (70-77) in order to remove dust and/or dirt from the pane (9) and/or the mirrors (70-77).

## Revendications

1. Dispositif d'inspection (1) permettant d'inspecter une pointe de câble (18) d'un câble (21), en particulier d'un câble (21) usiné, de préférence d'un câble (21) relié à un contact à sertir par l'intermédiaire d'une liaison de sertissage,
dans lequel le dispositif d'inspection (1) présente un agencement de miroirs (22) comportant un axe central (60), dans lequel la pointe de câble (18) peut être disposée dans l'agencement de miroirs (22) le long de l'axe central (60) pour inspecter la pointe de câble (18),
dans lequel l'agencement de miroirs (22) comprend plusieurs miroirs (70-77) disposés selon un angle prédéfini les uns par rapport aux autres et selon un angle prédéfini par rapport à l'axe central (60) pour observer la pointe de câble (18) disposée le long de l'axe central (60) de l'agencement de miroirs (22) sous différents angles de vue,
dans lequel le dispositif d'inspection (1) comprend en outre une caméra (2) permettant de générer des images de la pointe de câble (18) à partir de différents angles de vue au moyen des miroirs (70-77),
dans lequel le dispositif d'inspection (1) présente une vitre transparente (9) qui est conçue pour empêcher les saletés et/ou les poussières de passer de l'agencement de miroirs (22) à la caméra (2) de telle sorte que l'agencement de miroirs (22) est disposé sur un premier côté de la vitre (9) et la caméra (2) est disposée sur un second côté de la vitre (9) opposé au premier côté,
**caractérisé en ce que** le dispositif d'inspection (1) présente en outre un dispositif de nettoyage à air comprimé (10) permettant de nettoyer la vitre (9) et/ou les miroirs (70-77) au moyen d'air comprimé, dans lequel le dispositif de nettoyage à air comprimé (10) est conçu pour éjecter l'air comprimé le long de la vitre (9) et/ou le long d'au moins une partie des miroirs (70-77), **et en ce que** le dispositif d'inspection (1) comprend un boîtier (16), dans lequel le dispositif d'inspection (1) est conçu de telle sorte que le dispositif de nettoyage à air comprimé (10) peut être retiré du dispositif d'inspection (1) et réinséré dans le dispositif d'inspection (1) sans ouvrir le boîtier (16) du dispositif d'inspection (1) qui protège la zone sur le premier côté et/ou le second côté de la vitre (9) contre la pénétration de saletés et/ou de poussières provenant de l'environnement, dans lequel le dispositif de nettoyage à air comprimé (10) peut être inséré dans une ouverture entre la vitre (9) et l'agencement de miroirs (22) et peut être retiré de celle-ci.

2. Dispositif d'inspection (1) selon la revendication 2, dans lequel le dispositif d'inspection (1) est conçu de telle sorte que, lorsque le dispositif de nettoyage à air comprimé (10) est inséré dans le dispositif d'inspection (1) ou lorsque le dispositif de nettoyage à air comprimé (10) est disposé dans le dispositif d'inspection (1), un canal d'air comprimé (13) disposé de manière fixe par rapport au dispositif d'inspection (1) et permettant d'alimenter le dispositif de nettoyage à air comprimé (10) en air comprimé est ou peut être relié de manière fluidique au dispositif de nettoyage à air comprimé (10).

3. Dispositif d'inspection (1) selon l'une des revendications précédentes, dans lequel le dispositif d'inspection (1) comprend une ouverture de réception de câble (20) et un moyen de centrage de câble (15), dans lequel le dispositif d'inspection (1) est conçu de telle sorte que l'ouverture de réception de câble (20) pour l'introduction de la pointe de câble (18) dans l'agencement de miroirs (22) le long de l'axe central (60) peut être fermée par le moyen de centrage de câble (15) pour maintenir le câble (21) à l'exception d'une ouverture du moyen de centrage de câble (15) pour recevoir et maintenir le câble (21).

4. Dispositif d'inspection (1) selon l'une des revendications précédentes, dans lequel le dispositif d'inspection (1) comprend un boîtier (16), dans lequel le dispositif d'inspection (1) est conçu de telle sorte qu'un élément de calibrage, en particulier une charte de gris (14), permettant de calibrer la caméra (2) sans ouvrir le boîtier (16) du dispositif d'inspection (1) qui protège la zone située sur le premier côté et/ou le second côté de la vitre (9) contre la pénétration de saletés et/ou de poussières provenant de l'environnement, peut être introduit dans le dispositif d'inspection (1), en particulier sur le premier côté de la vitre (9), dans l'ouverture permettant de recevoir le dispositif de nettoyage à air comprimé (10) de telle sorte qu'au moins une partie des miroirs (70-77), en particulier tous les miroirs (70-77), de l'agencement de miroirs (22) sont cachés par l'élément de calibrage, vus dans la direction de vision de la caméra (2).

5. Dispositif d'inspection (1) selon l'une des revendications précédentes, dans lequel le dispositif d'inspection (1) comprend en outre une ouverture d'évacuation (23) permettant d'évacuer l'air comprimé d'un intérieur de l'agencement de miroirs (22), dans lequel, en particulier, l'ouverture d'évacuation (23) est disposée en regard du dispositif de nettoyage à air comprimé (10) par rapport à l'axe central (60).

6. Dispositif d'inspection (1) selon l'une des revendications précédentes, dans lequel le dispositif de nettoyage à air comprimé (10) est conçu de telle sorte que le dispositif de nettoyage à air comprimé (10) éjecte l'air comprimé pour nettoyer les miroirs (70-77) en direction de l'ouverture de réception de câble (20) pour introduire la pointe de câble (18) dans l'agencement de miroirs (22).

7. Dispositif d'inspection (1) selon l'une des revendications précédentes, dans lequel le dispositif de nettoyage à air comprimé (10) est fabriqué d'une seule pièce, en particulier au moyen d'un procédé d'impression sur métal et/ou par impression 3D.

8. Dispositif d'inspection (1) selon l'une des revendications 1 à 7, dans lequel le dispositif de nettoyage à air comprimé (10) est réalisé en plusieurs parties et/ou est fabriqué au moyen d'un procédé de moulage.

9. Dispositif d'inspection (1) selon l'une des revendications 2 à 8, dans lequel le dispositif de nettoyage à air comprimé (10) comprend plusieurs canaux de guidage d'air comprimé permettant de guider l'air comprimé dans le dispositif de nettoyage à air comprimé (10), dans lequel, lorsque le dispositif de nettoyage à air comprimé (10) est inséré ou disposé dans l'ouverture du dispositif d'inspection (1), deux des canaux de guidage d'air comprimé permettant d'éjecter l'air comprimé sont disposés le long de la vitre (9) et trois des canaux de guidage d'air comprimé permettant d'éjecter l'air comprimé sont disposés le long d'un miroir (70-77) ou de plusieurs miroirs (70-77) de l'agencement de miroirs (22).

10. Dispositif d'inspection (1) selon l'une des revendications précédentes, dans lequel la vitre (9) est en verre incassable et/ou en plastique incassable.

11. Dispositif d'inspection (1) selon l'une des revendications précédentes,
dans lequel le dispositif d'inspection (1) présente en outre **un** dispositif d'éclairage (3) permettant d'éclairer la pointe de câble (18) disposée le long de l'axe central (60), dans lequel le dispositif d'éclairage (3) présente
une pluralité de moyens d'éclairage (6) disposés le long d'une ellipse, en particulier le long d'un cercle, dans lequel les moyens d'éclairage (6) possèdent respectivement une direction de rayonnement principale qui est dirigée à l'opposé de l'agencement de miroirs (22), et un réflecteur (5) permettant de réfléchir la lumière émise par les moyens d'éclairage (6).

12. Dispositif d'inspection (1) selon la revendication 11, dans lequel le réflecteur (5) présente la forme d'un paraboloïde de révolution.

13. Procédé pour le nettoyage d'un agencement de miroirs (22) d'un dispositif d'inspection (1), dans lequel l'agencement de miroirs (22) comprend une pluralité de miroirs (70-77),
et/ou une vitre (9) transparente d'un dispositif d'inspection (1), dans lequel le dispositif d'inspection (1) est un dispositif d'inspection (1) selon l'une des revendications précédentes, dans lequel le procédé comprend l'étape suivante :
éjection d'air comprimé à partir d'un dispositif de nettoyage à air comprimé (10) le long de la vitre (9) et/ou le long d'au moins une partie du miroir (70-77) pour éliminer les poussières et/ou les salissures de la vitre (9) et/ou des miroirs (70-77).
